# EUROPÄISCHE PATENTANMELDUNG

(11) **EP 4 813 584 A1**
(43) Veröffentlichungstag der Anmeldung: **30.09.2026**
(21) Anmeldenummer: 26166855.2
(22) Anmeldetag: 23.03.2026
(51) Int. Cl.: B25J 9/16, B64G 4/00

(54) **WELTRAUMROBOTER UND VERFAHREN ZUR STEUERUNG EINES WELTRAUMROBOTERS**

(30) Priorität: 21.03.2025 DE 102025111079
(71) Anmelder: Deutsches Zentrum für Luft- und Raumfahrt e.V., 53227 Bonn (DE)
(72) Erfinder: Vijayan, Ria, 82234 Oberpfaffenhofen-Weßling (DE); Dr. De Stefano, Marco, 82234 Oberpfaffenhofen-Weßling (DE); Dr.-Ing. Ott, Christian, 82234 Oberpfaffenhofen-Weßling (DE)
(74) Vertreter: dompatent

(57) **Zusammenfassung**

Bei einem Weltraumroboter (1), mit
- zumindest einer Satellitenbasis (B),
- zumindest einem an der Satellitenbasis (B) angebrachten redundanten Manipulators (M), und
- zumindest einer Steuerungseinrichtung zur Steuerung des zumindest eines Manipulators (M) und der mindestens einen Satellitenbasis (B),
ist vorgesehen, dass die Steuerungseinrichtung dazu ausgebildet ist eine einheitliche Steuerung vorzusehen, die:
- sowohl Einschränkungen mittels quadratischer Programmierung (QP) berücksichtigt, als auch
- eine Steuerung mit Nullraumprojektion nutzt, die die Bewegung zumindest eines Teils des Manipulators (M), vorzugsweise der Endeffektor, von der Lagekonfiguration der Satellitenbasis (B) entkoppelt.

## Beschreibung

Die Erfindung betrifft einen Weltraumroboter nach dem Oberbegriff des Anspruchs 1, sowie ein Verfahren zur Steuerung eines Weltraumroboters nach dem Oberbegriff des Anspruchs 14.

Weltraumroboter werden in verschiedenen Anwendungen der Raumfahrt eingesetzt, insbesondere für die Erfassung, das Greifen und die Stabilisierung von Objekten im Orbit. Solche Systeme können für die Wartung, Reparatur oder Bergung von Satelliten und Raumfahrzeugen verwendet werden.

Bestehende Lösungen weisen verschiedene Herausforderungen auf. Beispielsweise können erfasste Objekte eine unkontrollierte Bewegung oder Rotationsdynamik aufweisen, was die Stabilisierung erschwert. Zudem ist die Steuerung der Roboterarme in der Schwerelosigkeit mit zusätzlichen Freiheitsgraden und kinematischen Einschränkungen verbunden. In vielen Fällen hängt die Steuerung der Roboterarme von der Bewegung der Satellitenbasis ab, was die Präzision beim Greifen und Stabilisieren reduziert.

Zudem besteht bei bekannten Systemen die Herausforderung, dass Interaktionskräfte zwischen dem Roboterarm und dem gegriffenen Objekt zu hohen Belastungen an der Greifschnittstelle führen können, was das Risiko von Beschädigungen erhöht. Weiterhin sind bestehende Steuerungssysteme oft durch Einschränkungen der verfügbaren Triebwerksleistung und Treibstoffressourcen limitiert, was eine effiziente Steuerung erforderlich macht. Der Erfindung liegt die Aufgabe zugrunde, einen verbesserten Weltraumroboter bereitzustellen, der eine effiziente Steuerung für die Annäherung, das Greifen und die Stabilisierung eines Objekts im Orbit ermöglicht.

Zur Lösung dieser Aufgabe dienen die Merkmale des Anspruchs 1 für den Weltraumroboter sowie des Anspruchs 14 für das Verfahren.

Die Erfindung sieht in vorteilhafter Weise vor, dass die Steuerungseinrichtung eine einheitliche Steuerung vorsieht, die sowohl Einschränkungen mittels quadratischer Programmierung (QP) berücksichtigt als auch eine Steuerung mit Nullraumprojektion nutzt. Dadurch wird sichergestellt, dass die Bewegung zumindest eines Teils des Manipulators unabhängig von der Lagekonfiguration der Satellitenbasis gesteuert werden kann.

Der Manipulator kann einen Endeffektor umfassen und mindestens zwei Gelenke aufweisen, wobei der Manipulator vorzugsweise als Roboterarm ausgebildet sein kann.

Die Steuerungseinrichtung kann dazu ausgebildet sein, die einheitliche Steuerung sowohl in der Annäherungsphase als auch in der Post-Greif-Stabilisierungsphase des Manipulators zum Annähern an, Greifen und Stabilisieren eines im Weltraum befindlichen Objekts zu verwenden.

Missionsrelevante Einschränkungen, wie die Begrenzung von Interaktionskräften an der Greifschnittstelle oder Drehmomentgrenzen der Triebwerke, können durch die quadratische Programmierung (QP) innerhalb der Nullraumprojektion berücksichtigt werden.

Die Steuerungseinrichtung kann dazu ausgebildet sein, die Bewegung zumindest des Teils des Manipulator während der Annäherungsphase unabhängig von der Lagekonfiguration der Satellitenbasis zu steuern.

Die Steuerungseinrichtung kann dazu ausgebildet sein, die Bewegung zumindest des Teils des Manipulators und der Satellitenbasis in der Post-Greif-Stabilisierungsphase unabhängig von den Interaktionskräften an der Greifschnittstelle zu steuern.

Die Steuerungseinrichtung kann dazu ausgebildet sein, Interaktionskräfte an der Greifschnittstelle explizit durch die quadratische Programmierung (QP) zu begrenzen, ohne dass Kraft-Moment-Sensoren verwendet werden.

Die Steuerungseinrichtung kann dazu ausgebildet sein, die Stabilisierung eines in der Post-Greif-Stabilisierungsphase gehaltenen Objekts zu gewährleisten, während der Nullraum die Satellitenbasis unabhängig von der Begrenzung der Interaktionskräfte stabilisiert.

Die Steuerungseinrichtung kann dazu ausgebildet ist, Drehmomentgrenzen der Triebwerke für die Verteilung der Drehmomente zwischen Triebwerken und Reaktionsrädern mittels der quadratischen Programmierung (QP) zu berücksichtigen, um den Treibstoffverbrauch in der Annäherungsphase zu minimieren.

Die Steuerungseinrichtung kann dazu ausgebildet ist, die Drehmomentgrenzen der Triebwerke für die Verteilung der Drehmomente zwischen Triebwerken und Reaktionsrädern mittels der quadratischen Programmierung (QP) zu berücksichtigen, um den externen Impuls in der Post-Greif-Stabilisierungsphase zu minimieren.

Die Steuerungseinrichtung kann dazu ausgebildet sein, Interaktionskräfte und Drehmomente an der Greifschnittstelle zu berechnen, ohne dass diese durch Kraft-Moment-Sensoren gemessen werden.

Die Steuerungseinrichtung kann dazu ausgebildet sein, innerhalb der Steuerung mit Nullraumprojektion eine Impedanzregelung zur Verfolgung von Bewegungsaufgaben in Nullraum-Koordinaten anwendet gemäß der folgenden Gleichung: $\begin{matrix}T 1 : \\ T 2 : \\ T 3 :\end{matrix} {{\left[\begin{matrix}{F}_{e}^{′} \\ {F}_{n}^{′} \\ {F}_{r}^{′}\end{matrix}\right]}_{︸}}_{F ′} = Λ ′ \left[\begin{matrix}{\dot{v}}_{e}^{d} \\ {{q}^{¨}}_{n}^{d} \\ 0\end{matrix}\right] + μ ′ \left[\begin{matrix}{\dot{v}}_{e}^{d} \\ {\dot{q}}_{n}^{d} \\ 0\end{matrix}\right] + \left[\begin{matrix}E {K}_{Pe} Δ {x}_{e} + {K}_{De} Δ {v}_{e} \\ {K}_{Pn} Δ {q}_{n} + {K}_{Dn} Δ {\dot{q}}_{n} \\ 0\end{matrix}\right]$ wobei **Λ'** und **µ'** nullraumentkoppelte Trägheits- und Coriolismatrizen sind, die die Form einer unteren Dreiecksblockmatrix haben, ***E*** transformiert den Quaternion-basierten Fehler in einem wrench.

Die Steuerungseinrichtung kann die Impedanzregelung in Systemaktor-Koordinaten transformiert gemäß der folgenden Gleichung: $Γ = {{{J}_{e}^{T} {F}_{e}^{′}}_{︸}}_{{Γ}_{T 1}} + {{{\overline{J}}_{n}^{T} {F}_{n}^{′}}_{︸}}_{{Γ}_{T 2}} + {{{\overline{J}}_{r}^{T} {F}_{r}^{′}}_{︸}}_{{Γ}_{T 3}} + {Γ}_{μ}$ wobei der letzte Term ein Nullraum-Coriolis-Term für die strikte Entkopplung von Aufgaben ist.

Die Steuerungseinrichtung kann dazu ausgebildet sein, eine quadratische Optimierung (QP) zur Begrenzung der Interaktionskräfte in der Post-Greif-Stabilisierungsphase gemäß der folgenden Gleichung durchzuführen: ${min}_{{F}_{e}^{*}} \frac{1}{2} {\left({F}_{e}^{*}-{F}_{e}^{′}\right)}^{T} {Q}_{c} \left({F}_{e}^{*}-{F}_{e}^{′}\right)$ $s . t . {\left|{F}_{c}\right|}_{i} \leq {F}_{c , ma {x}_{i}}$ ${v}_{e}^{T} \left({F}_{e}^{*}-E{K}_{Pe}Δ{x}_{e}\right) < 0 ,$ wobei die Kontaktkraft analytisch als Funktion der am Endeffektor wirkenden Kraft gemäß der folgenden Gleichung berechnet wird: ${F}_{c} = {\left(I+{Λ}_{ee}+{Λ}_{cc}^{- 1}\right)}^{- 1} {F}_{e}^{*} + f \left({v}_{s}, {v}_{c}\right)$

Wobei **Λ'ₑₑ** and **Λ'_{cc}** die Trägheiten des zumindest einen Teil des Manipulators und des gehaltenen Objekts an der Greifschnittstelle berücksichtigt werden.

Die Steuerungseinrichtung kann dazu ausgebildet sein, eine quadratische Optimierung (QP) zur Verteilung und Begrenzung der Triebwerksdrehmomente gemäß der folgenden Gleichung durchzuführen: ${min}_{{F}_{r}^{*}} \frac{1}{2} {\left(\overline{Γ}+{\overline{J}}_{r}^{T}{F}_{r}^{*}\right)}^{T} {Q}_{Γ} \left(\overline{Γ}+{\overline{J}}_{r}^{T}{F}_{r}^{*}\right)$ $s . t . {\left|{τ}_{b}\right|}_{i} \leq {τ}_{b , {max}_{i}} .$ wobei $\overline{Γ} = {Γ}_{T 1} + {Γ}_{T 2} + {Γ}_{μ}$ und das Triebwerksdrehmoment aus der Aufgabe der Reaktionsräder wie folgt bestimmt wird ${τ}_{b} = {S}_{b} \left(\overline{Γ}+{\overline{J}}_{r}^{T}{F}_{r}^{*}\right)$ und wobei ***S_{b}*** eine Selektionsmatrix, die das Triebwerksdrehmoment aus dem vollständigen Steuervektor in Systemkoordinaten auswählt.

Der Weltraumroboter kann zudem mindestens eine Sensoreinrichtung aufweisen, die zur Erfassung der Position und Orientierung der Satellitenbasis, der Gelenkwinkel des Manipulators sowie der Position des Greifpunkts eines im Weltraum befindlichen Objekts dient.

Erfindungsgemäß kann ferner ein Verfahren zur Steuerung eines Weltraumroboters (1) vorgesehen sein, mit zumindest einer Satellitenbasis (B) und zumindest einem an der Satellitenbasis (B) angebrachten redundanten Manipulator (M), umfassend die Schritte:
Steuern des zumindest einen Manipulators und der mindestens einen Satellitenbasis,
bei dem in vorteilhafter Weise vorgesehen ist, dass eine einheitliche Steuerung bereitgestellt wird, die sowohl Einschränkungen mittels quadratischer Programmierung (QP) berücksichtigt als auch eine Steuerung mit Nullraumprojektion nutzt, die die Bewegung zumindest eines Teils des Manipulators von der Lagekonfiguration der Satellitenbasis entkoppelt.

Die einheitliche Steuerung kann sowohl in der Annäherungsphase als auch in der Post-Greif-Stabilisierungsphase des Manipulators zum Annähern an, Greifen und Stabilisieren eines im Weltraum befindlichen Objekts verwendet werden.

Die Steuerungseinrichtung kann dazu ausgebildet sein, Interaktionskräfte an der Greifschnittstelle explizit durch quadratische Programmierung (QP) zu begrenzen, ohne dass Kraft-Moment-Sensoren verwendet werden.

Im Folgenden werden unter Bezugnahme auf die Zeichnungen Ausführungsbeispiele der Erfindung näher erläutert.

Es zeigen schematisch:
- Fig. 1: zeigt eine schematische Darstellung eines Weltraumroboters 1,
- Fig. 2: zeigt die Steuerungseinrichtung CC
- Fig. 3: Abfolge der Berechnungen für die erste Stufe
- Fig. 4: Abfolge der Berechnungen für die zweite Stufe

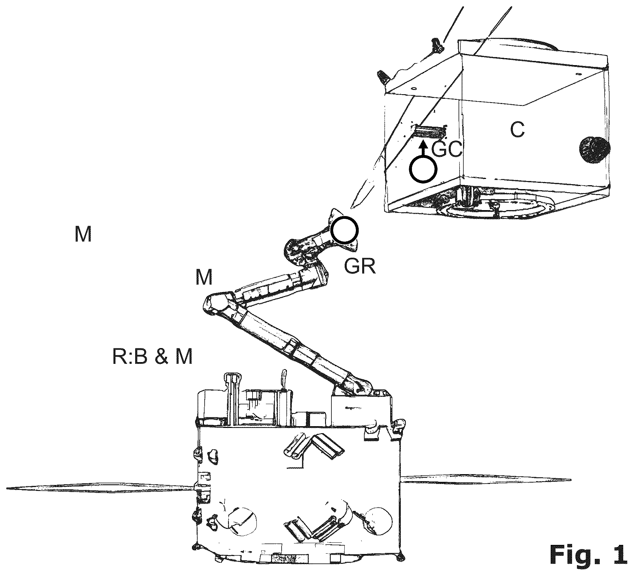

Figur 1 zeigt eine schematische Darstellung eines Weltraumroboters 1, der zumindest eine Satellitenbasis B mit zumindest einem an der Satellitenbasis B angebrachten redundanten Manipulator M umfasst. Der Weltraumroboter 1 kann dazu verwendet werden, sich an ein im Weltraum befindliches Object C anzunähern, es zu greifen und es zu stabilisieren. Ein im Weltraum befindlichen Objekt C kann, wie dargestellt ein Satellit sein und wird im Folgenden auch Client-Satellit C genannt wird.

Der Client-Satellit C befindet sich zu Beginn der Annäherungsphase in unmittelbarer Nähe zum Weltraumroboter 1. Ein Weltraumrotor-Greifschnittstelle GR ist am Weltraumroboter 1 und eine Client Greifschnittstelle GC ist als auch am Client-Satellit C vorhanden.

Die Weltraumrotor-Greifschnittstelle GR kann eine standardisierte Schnittstelle und die Client Greifschnittstelle kann eine generische Schnittstelle (GC) sein, wie z. B. ein Startadapterring, der typischerweise Teil der meisten Satellitenstrukturen ist.

Figur 1 zeigt das allgemeine Anwendungsszenario für sogenanntes On-Orbit-Servicing. Der Weltraumroboter 1, der auch im Folgenden als Servicer genannt wird, weist die Satellitenbasis B auf, die mit Aktuierungssystemen, wie z.B. Triebwerken und Reaktionsräder sowie zumindest einem redundanten Manipulator M mit mindestens zwei Gelenken Anspruch 3 ausgestattet sein kann. Der Manipulator M kann ein Roboterarm sein.

Der dargestellte Manipulator M wird über zumindest sieben interne Drehmomentbefehle (einer pro Gelenk) betätigt, während die Satellitenbasis B über zumindest sechs externe Kräfte/Drehmomente der Triebwerke und drei interne Drehmomente der Reaktionsräder gesteuert wird. Der Servicer B ist zudem mit mindestens einer Sensoreinrichtung S ausgestattet, die zur Erfassung der Position und Orientierung der Satellitenbasis, der Gelenkwinkel des Manipulators M sowie der Position des Greifpunkts des Kundensatelliten C dient.

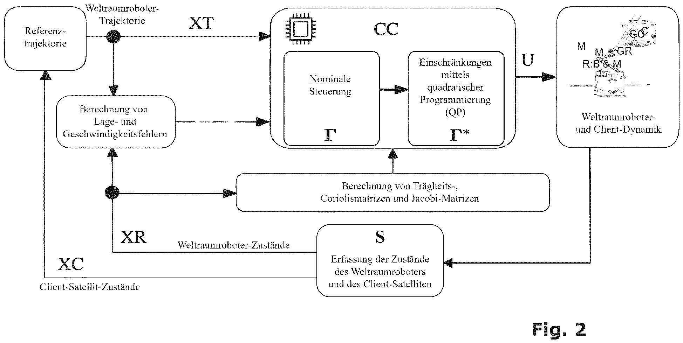

Fig. 2 zeigt eine Steuerungseinrichtung CC. Die Steuerungseinrichtung CC ist dazu ausgebildet eine einheitliche Steuerung vorzusehen, die sowohl Einschränkungen mittels quadratischer Programmierung (QP) berücksichtigt, als auch eine Steuerung mit Nullraumprojektion nutzt, die die Bewegung zumindest eines Teils des Manipulators M, insbesondere eines Endeffektors, von der Lagekonfiguration der Satellitenbasis B entkoppelt.

Die Steuerungseinrichtung CC reagiert auf Messungen der Sensoreinrichtung S bezüglich der Zustände des Weltraumroboters XR und Zuständen des Client-Satellit XC. Der Referenztrajektoriensignalgeber XT und die Sensormessungen bilden den Regelungsfehler, auf dessen Basis der Steuerungsrechner CC die Steuerungssignale U für den Weltraumroboter 1 berechnet.

Die in Fig. 2 dargestellte Ausführungsform der Erfindung umfasst den Weltraumroboter 1 sowie die Steuerungseinrichtung CC. Reagierend auf Zustandssignale XR, XC, die mit der Sensoreinrichtung S gemessen werden, und des Referenztrajektoriensignalgebers XT, berechnet der Steuerungseinrichtung CC des Weltraumroboters 1 die Steuerungssignale U für die Gelenkmotoren des Manipulators M sowie für die Triebwerke und Reaktionsräder der Satellitenbasis B.

Das Steuerungsdesign ist für beide Phasen - die Annäherungsphase und die Post-Greif-Stabilisierungsphase - vereinheitlicht. Dabei wird eine primäre kartesische Aufgabe dem Endeffektor T1 zugewiesen, um zunächst die Verfolgung des Greifpunkts des Kundensatelliten und später die Stabilisierung zu ermöglichen.

Eine sekundäre Aufgabe T2 wird auf Gelenkebene des Manipulators M definiert, um die Manipulierbarkeit sicherzustellen und in der Post-Greif-Phase eine sichere Konfiguration der Satellitenbasis B zu erreichen.

Eine dritte Aufgabe T3 nutzt die Redundanz in der Basisaktuierung, um die Steuerung zwischen Triebwerken und Reaktionsrädern zu verteilen und dadurch den Treibstoffverbrauch zu optimieren.

Die Aufgaben werden in einer festgelegten Prioritätsreihenfolge ausgeführt, wobei die Nullraumhierarchie wie folgt definiert ist:
- T2 wird im Nullraum von T1 ausgeführt,
- T3 wird im Nullraum von T2 ausgeführt.

Diese Aufgabenhierarchie ermöglicht eine sichere Annäherung und das zuverlässige Greifen eines rotierenden Satelliten, da die Steuerungsebenen klar voneinander getrennt und optimiert sind.

Die Aufgaben der Subsysteme während der Annäherungs- und Post-Greif-Phase können wie folgt dargestellt werden:
T1 (Endeffektor)
   - Annäherungsphase: Der Endeffektor verfolgt den Greifpunkt des Kundensatelliten.
   - Post-Greif-Phase: Der Kundensatellit wird stabilisiert, während die Interaktionskräfte am Endeffektor begrenzt werden.
T2 (Manipulatorgelenke)
   - Annäherungsphase: Die Gelenkbahn des Manipulators wird verfolgt, um eine geeignete Pose zum Greifen zu erreichen.
   - Post-Greif-Phase: Die Gelenkgeschwindigkeiten werden gedämpft, um eine sichere Konfiguration zu erreichen.
T3 (Reaktionsräder)
   - Annäherungsphase: Die Reaktionsräder werden genutzt, um den Einsatz der Triebwerke zu minimieren.
   - Post-Greif-Phase: Der durch das Einfangen entstandene externe Impuls wird durch die Aktuierung der Triebwerke abgeleitet.

Die Berechnung des Steuereingangs (U) aus dem vereinheitlichten Rahmen in Abbildung 2 umfasst im Wesentlichen zwei Stufen
a) Berechnung eines nominalen Steuereingangs auf der Grundlage eines Impedanzentwurfs mit entkoppelter Nullraumdynamik in Aufgabenkoordinaten,
b) dann die QP-optimierte Steuereingabe zu berechnen, die die anwendbaren Nebenbedingungen enthält. Ein solcher Entwurf kann allgemeiner für andere Aufgabendefinitionen als die in Tabelle 1 beschriebenen angewandt werden, wenn eine Beziehung zwischen der Nebenbedingung und den Aufgabenkoordinaten hergestellt werden kann, um die Ausgabe des QP-Optimierers zu beschränken.

Die relevanten Schritte können in einem Schritt-für-Schritt-Algorithmus für den Steuerungseinrichtung CC von Fig 2 zur Berechnung des Steuersignals U wie folgt aussehen

Dies ist die einzige Eingabe für das System R&C aus dem einheitlichen Kontrollrahmen für die Annährungs- und Post-Greif-phase.

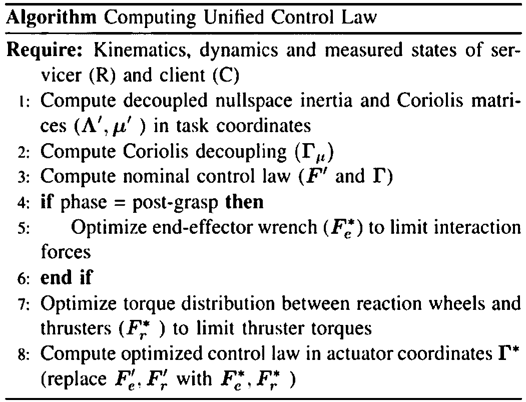

### Symbole und Notationen

- *^{d}* bezieht sich auf die gewünschte Trajektorie.
- Δ· ist der Fehler von der gewünschten Trajektorie.
- *ₙ* bezieht sich auf die Gelenke des Manipulators.
- *ᵣ* bezieht sich auf die Reaktionsräder.
- *_{b}* bezieht sich auf die Basis des Servicers.
- *ₛ* bezieht sich auf den Servicer (Basis + Reaktionsräder + Manipulator).
- *ₑ* bezieht sich auf den Endeffektor.
- *_{c}* bezieht sich auf den Kundensatelliten.
- ^{*} kennzeichnet eine QP-optimierte Größe.
- *^{max}* ist die maximale Schwelle einer Größe.
- *K_{P}* steht für die Proportionalverstärkung.
- *K_{D}* ist die Ableitungsverstärkung.
- ${F}_{e}^{′}$ bezeichnet die virtuelle Steuerung.
- *J* ist die Aufgaben-Jacobi-Matrix.
- $\overline{J}$ ist die Nullraum-projizierte Aufgaben-Jacobi-Matrix.
- *J_{N}* sind die gestapelten Nullraum-projizierten Aufgaben-Jacobi-Matrizen.
- Λ' ist die Nullraum-entkoppelte Trägheitsmatrix.
- *µ*' ist die Nullraum-entkoppelte Coriolismatrix.
- *υ_{c}* bezeichnet die kartesische Geschwindigkeit (linear und angular).
- *qₒ* steht für die Gelenkposition.
- *x_{c}* ist die Pose (Position und Quaternion).
- *Q* ist die QP-Gewichtungsmatrix.
- *F_{c}* ist die auf den Client übertragene Interaktionskraft.
- *τ_{b}* sind die Basis-Triebwerksdrehmomente.
- Γ ist das Steuerungseingangssignal für den Servicer (S), einschließlich Triebwerksmoment, Reaktionsraddrehmomente zur Basis (B) und Gelenkdrehmomente zum Manipulator (R).

Zum besseren Verständnis der Erfindung und der Anwendbarkeit auf ein reales Szenario werden im folgenden Abschnitt weitere Einzelheiten der Steuerung beschrieben. Insbesondere werden aus dem vorgeschlagenen Schema in Abbildung 2 nun der linke Block (Steuerung mit Nullraumprojektion) und der grüne Block (Einschränkungen mittels quadratischer Programmierung (QP)) mit zusätzlichen Details ausgearbeitet, die wie folgt zusammengefasst sind.

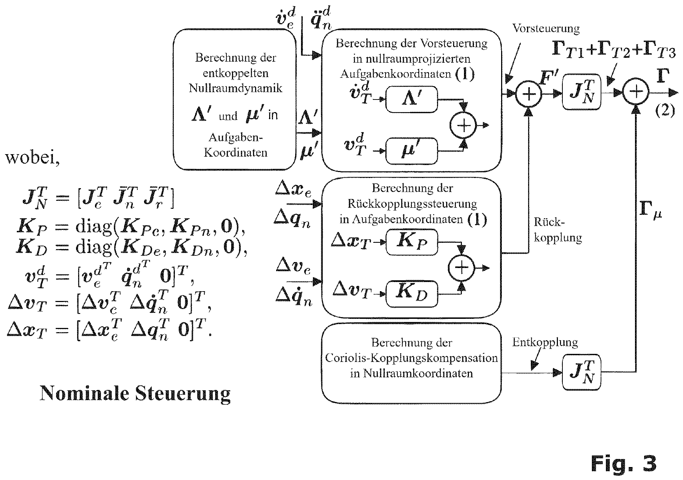

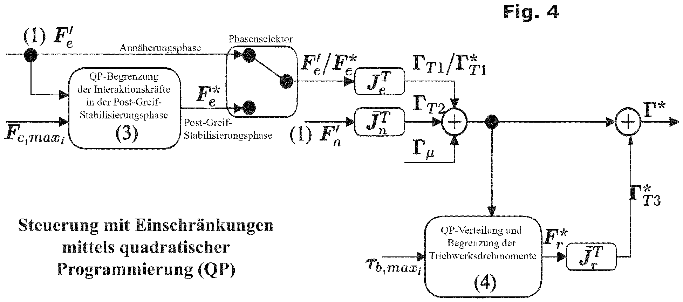

Die erste Stufe der Berechnung Steuerung mit Nullraumprojektion wird durch die in Gleichungen (1) und (2) verkörpert. Die zweite Stufe der Berechnung des QPgebundenen Reglers ist in den Gleichungen (3) und (4) enthalten. Die Abfolge der Berechnungen für die Umsetzung der Gleichungen (1) und (2) sind auch im Blockdiagramm in Fig.3 zusammengefasst, und ähnlich für die Gleichungen (3) und (4) in Fig 4.

| **Übersicht der relevanten Gleichungen und Beschreibung** | **Eq. *#*** |
|---|---|
| Impedanzsteuerungsgesetz für die Verfolgung in Nullraum-Aufgabenkoordinaten (vgl. Tabelle 1 für Steuerungsziele): | (1) |
| $\begin{matrix}T 1 : \\ T 2 : \\ T 3 :\end{matrix} {{\left[\begin{matrix}{F}_{e}^{′} \\ {F}_{n}^{′} \\ {F}_{r}^{′}\end{matrix}\right]}_{︸}}_{F ′} = Λ ′ \left[\begin{matrix}{\dot{v}}_{e}^{d} \\ {{q}^{¨}}_{n}^{d} \\ 0\end{matrix}\right] + μ ′ \left[\begin{matrix}{v}_{e}^{d} \\ {\dot{q}}_{n}^{d} \\ 0\end{matrix}\right] + \left[\begin{matrix}{EK}_{Pe} Δ {x}_{e} + {K}_{De} Δ {v}_{e} \\ {K}_{Pn} Δ {q}_{n} + {K}_{Dn} Δ {\dot{q}}_{n} \\ 0\end{matrix}\right]$ wobei **Λ*'*** und **µ'** nullraumentkoppelte Trägheits- und Coriolismatrizen sind, die die Form einer unteren Dreiecksblockmatrix haben. ***E*** transformiert den Quaternion-basierten Fehler in einen wrench. | |
| Impedanzsteuerungsgesetz, transformiert in Systemaktorkoordinaten: | (2) |
| $Γ = {{{J}_{e}^{T} {F}_{e}^{′}}_{︸}}_{{Γ}_{T 1}} + {{{\overline{J}}_{n}^{T} {F}_{n}^{′}}_{︸}}_{{Γ}_{T 2}} + {{{\overline{J}}_{r}^{T} {F}_{r}^{′}}_{︸}}_{{Γ}_{T 3}} + {Γ}_{μ}$ wobei der letzte Term ein Nullraum-Coriolis-Term für die strikte Entkopplung von Aufgaben ist. | |
| T1: QP-Optimierung der Endeffektor-Aufgabe zur Begrenzung der Interaktionskräfte in der | (3) |
| ${min}_{{F}_{e}^{-}} \frac{1}{2} {\left({F}_{e}^{∗}-{F}_{e}^{′}\right)}^{T} {Q}_{c} \left({F}_{e}^{∗}-{F}_{e}^{′}\right)$ | |
| s.t. **\|*****F**_{c}*\|*ᵢ* ≤ ***F***_{*c*,*maxi*}, | |
| ${v}_{e}^{T} \left({F}_{e}^{∗}-{EK}_{Pe}Δ{x}_{e}\right) < 0 ,$ | |
| Nach-Greifphase: | |
| wobei die Kontaktkraft analytisch als eine Funktion des Endeffektor wrench berechnet wird, | |
| Dabei **Λ'_{cc}** und **Λ**'_{cc} die Trägheit des Endeffektors des Bedieners und des client Satellit, projiziert auf die Greifschrlittstelle. | |
| ${F}_{e} = {\left(I+{Λ}_{ee}{Λ}_{ee}^{- 1}\right)}^{- 1} {F}_{e}^{∗} + f \left({v}_{s}, {v}_{e}\right)$ | |
| T3: QP-Optimierung der Reaktionsradaufgabe zur Umverteilung und Begrenzung der Triebwerksdrehmomente: | (4) |
| ${min}_{{F}_{r}^{∗}} \frac{1}{2} {\left(\overline{Γ}+{\overline{J}}_{r}^{T}{F}_{r}^{∗}\right)}^{T} {Q}_{Γ} \left(\overline{Γ}+{\overline{J}}_{r}^{T}{F}_{r}^{∗}\right)$ s.t. \|***τ**_{b}*\|*ᵢ* ≤ ***τ***_{*b*,*maxi*}, | |
| wo, | |
| $\overline{Γ} = {Γ}_{T 1} + {Γ}_{T 2} + {Γ}_{μ}$ | |
| und das Triebwerksdrehmoment wird aus der Aufgabe des Reaktionsrads anhand der | |
| ${τ}_{b} = {S}_{θ} \left(\overline{Γ}+{\overline{J}}_{r}^{T}{F}_{r}^{∗}\right)$ folgenden Beziehung berechnet, | |
| ***S_{b}*** ist die entsprechende Selektor-Matrix, die das Drehmoment des Triebwerks aus dem gesamten Steuervektor in systemkoordinaten auswählt. | |

## Patentansprüche

1. Weltraumroboter (1), mit
- zumindest einer Satellitenbasis (B),
- zumindest einem an der Satellitenbasis (B) angebrachten redundanten Manipulators (M), und
- zumindest einer Steuerungseinrichtung zur Steuerung des zumindest eines Manipulators (M) und der mindestens einen Satellitenbasis (B),
**dadurch gekennzeichnet,**
**dass** die Steuerungseinrichtung dazu ausgebildet ist eine einheitliche Steuerung vorzusehen, die:
- sowohl Einschränkungen mittels quadratischer Programmierung (QP) berücksichtigt, als auch
- eine Steuerung mit Nullraumprojektion nutzt, die die Bewegung zumindest eines Teils des Manipulators (M), vorzugsweise der Endeffektor, von der Lagekonfiguration der Satellitenbasis (B) entkoppelt.

2. Weltraumroboter (1) nach Anspruch 1, **dadurch gekennzeichnet, dass** der zumindest eine Teil des Manipulators (4) ein Endeffektor des Manipulators (4) sein kann.

3. Weltraumroboter (1) nach einem der vorhergehenden Ansprüche, **dadurch gekennzeichnet, dass** der Manipulator (4) mindestens zwei Gelenke aufweist und/oder der Manipulator (4) ein Roboterarm ist.

4. Weltraumroboter (1) nach einem der vorhergehenden Ansprüche, **dadurch gekennzeichnet, dass** die Steuerungseinrichtung dazu ausgebildet ist, die einheitliche Steuerung sowohl in der Annäherungsphase als auch in der Post-Greif-Stabilisierungsphase des Manipulators (4) zum Annähern an, Greifen und Stabilisieren eines im Weltraum befindlichen Objekts zu verwenden.

5. Weltraumroboter (1) nach einem der vorhergehenden Ansprüche, **dadurch gekennzeichnet, dass** die Steuerungseinrichtung dazu ausgebildet ist, missionsrelevante Einschränkungen, wie die Begrenzung von Interaktionskräften an der Greifschnittstelle und/oder Drehmomentgrenzen der Triebwerke, mittels quadratischer Programmierung (QP) innerhalb der Nullraumprojektion zu berücksichtigen.

6. Weltraumroboter (1) nach einem der vorhergehenden Ansprüche, **dadurch gekennzeichnet, dass** die Steuerungseinrichtung dazu ausgebildet ist, die Bewegung zumindest des Teils des Manipulators (4), vorzugsweise des Endeffektors, während der Annäherungsphase unabhängig von der Lagekonfiguration der Satellitenbasis (2), vorzugsweise über die Manipulator-Gelenke zu steuern.

7. Weltraumroboter (1) nach einem der vorhergehenden Ansprüche, **dadurch gekennzeichnet, dass** die Steuerungseinrichtung dazu ausgebildet ist, die Bewegung zumindest des Teils des Manipulators (4) und der Satellitenbasis (2) in der Post-Greif-Stabilisierungsphase unabhängig von den Interaktionskräften an der Greifschnittstelle zu steuern
und/oder die Steuerungseinrichtung dazu ausgebildet ist, Interaktionskräfte an der Greifschnittstelle explizit durch die quadratische Programmierung (QP) zu begrenzen, ohne dass Kraft-Moment-Sensoren verwendet werden.

8. Weltraumroboter (1) nach einem der vorhergehenden Ansprüche, **dadurch gekennzeichnet, dass** die Steuerungseinrichtung dazu ausgebildet ist, die Stabilisierung eines in der Post-Greif-Stabilisierungsphase gehaltenen Objekts zu gewährleisten, während der Nullraum die Satellitenbasis unabhängig von der Begrenzung der Interaktionskräfte stabilisiert
und/oder die Steuerungseinrichtung dazu ausgebildet ist, Drehmomentgrenzen der Triebwerke für die Verteilung der Drehmomente zwischen Triebwerken und Reaktionsrädern mittels der quadratischen Programmierung (QP) zu berücksichtigen, um den Treibstoffverbrauch in der Annäherungsphase zu minimieren.

9. Weltraumroboter (1) nach einem der vorhergehenden Ansprüche, **dadurch gekennzeichnet, dass** die Steuerungseinrichtung dazu ausgebildet ist, die Drehmomentgrenzen der Triebwerke für die Verteilung der Drehmomente zwischen Triebwerken und Reaktionsrädern mittels der quadratischen Programmierung (QP) zu berücksichtigen, um den externen Impuls in der Post-Greif-Stabilisierungsphase zu minimieren.
und/oder die Steuerungseinrichtung dazu ausgebildet ist, Interaktionskräfte und Drehmomente an der Greifschnittstelle zu berechnen, ohne dass diese durch Kraft-Moment-Sensoren gemessen werden.

10. Weltraumroboter (1) nach einem der vorhergehenden Ansprüche, **dadurch gekennzeichnet, dass** die Steuerungseinrichtung innerhalb der Steuerung mit Nullraumprojektion eine Impedanzregelung zur Verfolgung von Bewegungsaufgaben in Nullraum-Koordinaten anwendet gemäß der folgenden Gleichung: $\begin{matrix}T 1 : \\ T 2 : \\ T 3 :\end{matrix} {{\left[\begin{matrix}{F}_{e}^{′} \\ {F}_{n}^{′} \\ {F}_{r}^{′}\end{matrix}\right]}_{︸}}_{F ′} = Λ ′ \left[\begin{matrix}{\dot{v}}_{e}^{d} \\ {{q}^{¨}}_{n}^{d} \\ 0\end{matrix}\right] + μ ′ \left[\begin{matrix}{v}_{e}^{d} \\ {\dot{q}}_{n}^{d} \\ 0\end{matrix}\right] + \left[\begin{matrix}E {K}_{Pe} Δ {x}_{e} + {K}_{De} Δ {v}_{e} \\ {K}_{Pn} Δ {q}_{n} + {K}_{Dn} Δ {\dot{q}}_{n} \\ 0\end{matrix}\right]$ wobei **Λ'** und **µ'** nullraumentkoppelte Trägheits- und Coriolismatrizen sind, die die Form einer unteren Dreiecksblockmatrix haben, ***E*** transformiert den Quaternion-basierten Fehler in einem wrench.

11. Weltraumroboter (1) nach Anspruch 10, **dadurch gekennzeichnet, dass** die Steuerungseinrichtung die Impedanzregelung in Systemaktor-Koordinaten transformiert gemäß der folgenden Gleichung: $Γ = {{{J}_{e}^{T} {F}_{e}^{′}}_{︸}}_{{Γ}_{T 1}} + {{{\overline{J}}_{n}^{T} {F}_{n}^{′}}_{︸}}_{{Γ}_{T 2}} + {{{\overline{J}}_{r}^{T} {F}_{r}^{′}}_{︸}}_{{Γ}_{T 3}} + {Γ}_{μ}$ wobei der letzte Term ein Nullraum-Coriolis-Term für die strikte Entkopplung von Aufgaben ist.

12. Weltraumroboter (1) nach einem der vorhergehenden Ansprüche, **dadurch gekennzeichnet, dass** die Steuerungseinrichtung dazu ausgebildet ist, eine quadratische Optimierung (QP) zur Begrenzung der Interaktionskräfte in der Post-Greif-Stabilisierungsphase gemäß der folgenden Gleichung durchzuführen: ${min}_{{F}_{e}^{∗}} \frac{1}{2} {\left({F}_{e}^{∗}-{F}_{e}^{′}\right)}^{T} {Q}_{c} \left({F}_{e}^{∗}-{F}_{e}^{′}\right)$ $s . t . {\left|{F}_{c}\right|}_{i} \leq {F}_{c , {max}_{i}}$ ${v}_{e}^{T} \left({F}_{e}^{∗}-E{K}_{Pe}Δ{x}_{e}\right) < 0 ,$
wobei die Kontaktkraft analytisch als Funktion der am Endeffektor wirkenden Kraft gemäß der folgenden Gleichung berechnet wird: ${F}_{c} = {\left(I+{Λ}_{ee}{Λ}_{cc}^{- 1}\right)}^{- 1} {F}_{e}^{∗} + f \left({v}_{s}, {v}_{c}\right)$
wobei **Λ'ₑₑ** and **Λ'_{cc}** die Trägheiten des zumindest einen Teil des Manipulators und des gehaltenen Objekts an der Greifschnittstelle berücksichtigt werden.

13. Weltraumroboter (1) nach einem der vorhergehenden Ansprüche, **dadurch gekennzeichnet, dass** die Steuerungseinrichtung dazu ausgebildet ist, eine quadratische Optimierung (QP) zur Verteilung und Begrenzung der Triebwerksdrehmomente gemäß der folgenden Gleichung durchzuführen: ${min}_{{F}_{r}^{∗}} \frac{1}{2} {\left(\overline{Γ}+{\overline{J}}_{r}^{T}{F}_{r}^{∗}\right)}^{T} {Q}_{Γ} \left(\overline{Γ}+{\overline{J}}_{r}^{T}{F}_{r}^{∗}\right)$ $s . t . {\left|{τ}_{b}\right|}_{i} \leq {τ}_{b , {max}_{i}} .$ wobei $\overline{Γ} = {Γ}_{T 1} + {Γ}_{T 2} + {Γ}_{μ}$
und das Triebwerksdrehmoment aus der Aufgabe der Reaktionsräder wie folgt berechnet wird ${τ}_{b} = {S}_{b} \left(\overline{Γ}+{\overline{J}}_{r}^{T}{F}_{r}^{∗}\right)$
und wobei ***S_{b}*** eine Selektionsmatrix, die das Triebwerksdrehmoment aus dem vollständigen Steuervektor in Systemkoordinaten auswählt.

14. Verfahren zur Steuerung eines Weltraumroboters (1) mit zumindest einer Satellitenbasis (B) und zumindest einem an der Satellitenbasis (B) angebrachten redundanten Manipulator (M), umfassend die Schritte:
- Steuern des zumindest einen Manipulators (M) und der mindestens einen Satellitenbasis (B),
**dadurch gekennzeichnet, dass**
eine einheitliche Steuerung bereitgestellt wird, die sowohl Einschränkungen mittels quadratischer Programmierung (QP) berücksichtigt als auch eine Steuerung mit Nullraumprojektion nutzt, die die Bewegung zumindest eines Teils des Manipulators, vorzugsweise des Endeffektors, von der Lagekonfiguration der Satellitenbasis entkoppelt.

15. Verfahren nach Anspruch 14, **dadurch gekennzeichnet, dass** die einheitliche Steuerung sowohl in der Annäherungsphase als auch in der Post-Greif-Stabilisierungsphase des Manipulators zum Annähern an, Greifen und Stabilisieren eines im Weltraum befindlichen Objekts verwendet wird
und/oder die Steuerungseinrichtung dazu ausgebildet ist, Interaktionskräfte an der Greifschnittstelle explizit durch quadratische Programmierung (QP) zu begrenzen, ohne dass Kraft-Moment-Sensoren verwendet werden.
